# EUROPEAN PATENT APPLICATION

(11) **EP 4 744 986 A1**
(43) Date of publication of application: **20.05.2026**
(21) Application number: 24212604.3
(22) Date of filing: 13.11.2024
(51) Int. Cl.: B60T 17/22

(54) **TEMPERATURE SENSING UNIT FOR A VEHICLE BRAKE, BRAKE MONITORING SYSTEM COMPRISING SUCH A TEMPERATURE SENSING UNIT, AND RESPECTIVE VEHICLE**

(71) Applicant: ZF CV Systems Europe BV, 1170 Brüssel (BE)
(72) Inventor: STRZALA, Wieslaw, 46-220 Byczyna (PL)
(74) Representative: Schäferjohann, Volker

(57) **Abstract**

A temperature sensing unit (1), designed for a vehicle brake, comprises a parallel circuit having a first branch (2) with a first thermal switch (SW1) and a second branch (4) with a second thermal switch (SW2). The first thermal switch (SW1) is designed to switch at a first switching temperature indicating a first condition of the vehicle brake, and the second thermal switch (SW2) is designed to switch at a second switching temperature higher than the first switching temperature for indicating a second condition of the vehicle brake.

## Description

The present invention relates to a temperature sensing unit for a vehicle brake, for example for a disc brake of a commercial vehicle, to a brake monitoring system comprising such a temperature sensing unit, and to a vehicle comprising a respective brake monitoring system.

Disc brakes in vehicles have brake pads which, depending on the actuation of a brake value transmitter, are pressed by an actuator onto a brake rotor connected to a wheel to be braked in order to be able to transmit a braking effect to the brake rotor and thereby to the wheel. If the vehicle is braked, the braking process creates a particle abrasion in the disc brake in the form of brake dust, which is harmful to the environment.

With a reduction of exhaust emissions, emission from tires and brakes became the largest and a critical contributor of solid particle emissions from vehicles. An emission from the brakes to the environment can be reduced, for example, by encapsulating the brake. This unfortunately affects the brake cooling, which in turn can affect the brake performance. Studies also have shown that with an increase of temperature, a wear of the brake pads and the brake rotor increases, which raises the risk of emissions entering the environment. Also, a risk of lower brake performance and even a damage of the disc brake may happen when the temperature of the disc brake is too high. This is also the case for drum brakes, which are still widely used, for example, for commercial vehicles.

WO 98/29672 A1 discloses a brake monitoring system comprising a brake temperature detection unit externally attached to one of the brake assemblies of a vehicle. The brake temperature detection unit includes a sensor for detecting radiation from the corresponding brake assembly and a processing unit coupled to the sensor for determining the temperature of the brake assembly from the detected radiation. The sensor may be, for example, an infrared sensor.

KR 10-2023-0059731 discloses a temperature sensor for measuring the temperature of a disc, and a disc brake having a respective temperature sensor. The temperature sensor is in particular an infrared sensor providing real-time detection.

CN 105465251 A discloses a temperature detection device for a front brake and a rear brake of an automobile, wherein infrared temperature sensors are arranged on the front brake and the rear brake of the automobile. Input ends of a temperature conversion unit module are connected with the infrared temperature sensors, a control circuit is connected with an output end of the temperature conversion unit module, a temperature signal collector is connected with the output end of the control circuit, and a central processing unit is connected with the output end of the temperature signal collector.

It is an object of the present invention to provide an improved temperature sensing unit, a brake monitoring system comprising such a temperature sensing unit, and and respective vehicle comprising such a brake monitoring system.

The invention is as set out in the independent claims 1, 8 and 14. Preferred embodiments are defined by the dependent claims.

A temperature sensing unit is designed for a vehicle brake and comprises a parallel circuit having a first branch with a first thermal switch and a second branch with a second thermal switch. The first thermal switch is designed to switch at a first switching temperature indicating a first condition of the vehicle brake, and the second thermal switch is designed to switch at a second switching temperature higher than the first switching temperature for indicating a second condition of the vehicle brake.

In a preferred embodiment, the thermal switches are bimetal thermal switches.

In another preferred embodiment, the bimetal thermal switches are closed below their switching temperature and are open above their switching temperature.

In another preferred embodiment, the first branch comprises a first resistor coupled in series with the first thermal switch and the second branch comprises a second resistor coupled in series with the second thermal switch.

In another preferred embodiment, the first resistor and the second resistor have about the same value of electrical resistance.

In another preferred embodiment, the first temperature is a first critical temperature for the vehicle brake, for example a temperature at which a high wear of the vehicle brake occurs, and the second temperature is a second critical temperature for the vehicle brake, for example a temperature at which the vehicle brake may be damaged.

In another preferred embodiment, the circuit elements of the temperature sensing unit are integrated within a module being fixable at a brake pad or a brake shoe of the vehicle brake.

The invention further defines a brake monitoring system for a vehicle comprising a processing unit and a temperature sensing unit according to the invention, mountable at a brake of the vehicle.

In a preferred embodiment, the brake is a disc brake and the temperature sensing unit is mountable at a back side of a brake pad of the disc brake.

In another preferred embodiment, the brake is a drum brake and the temperature sensing unit is mountable at a back side of a brake shoe of the drum brake.

In another preferred embodiment, the brake monitoring system comprises indicating means for a cabin of the vehicle for informing a driver of the vehicle about a temperature state of the brake.

In another preferred embodiment, the brake monitoring system comprises a temperature sensing unit for each brake of the vehicle.

In another preferred embodiment, the processing unit is connectable via lines to each of the temperature sensing units for operating the temperature sensing units.

The invention defines further a vehicle comprising such a brake monitoring system.

The invention allows to operate the brakes of a vehicle in a safe state, in which the wear of the brakes is low, and which is favorable with regard to environmental standards. In addition, an overheated brake may be detected by the brake monitoring system, which may happen, for example, under a heavy load condition, an inappropriate driving style, or in the case of a hot runner.

Preferred embodiments of the disclosure are explained in more detail below by way of example with reference to schematic drawings, which show:
- Fig. 1a: a temperature sensing unit for a vehicle brake, comprising two thermal switches, in a first state;
- Fig. 1b: the temperature sensing unit of Fig. 1a, in a second state;
- Fig. 1c: the temperature sensing unit of Fig. 1a, in a third state;
- Fig. 2: a disc brake of a commercial vehicle, at which the temperature sensing unit of Fig. 1 is mounted;
- Fig. 3: a drum brake of a commercial vehicle, at which the temperature sensing unit of Fig. 1 is mounted;
- Fig. 4: a voltage diagram showing voltages as provided by the temperature sensing unit of the Fig. 1;
- Fig. 5: a brake monitoring system for a vehicle comprising four temperature sensing units of the Fig. 1; and
- Fig. 6: another preferred embodiment of a temperature sensing unit for a vehicle brake.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventors to furthering the art and are to be construed as being without limitation to such specifically recited examples and conditions. Moreover, all statements herein reciting principles, aspects, and embodiments of the disclosure, as well as specific examples thereof, are intended to encompass both structural and functional equivalents thereof.

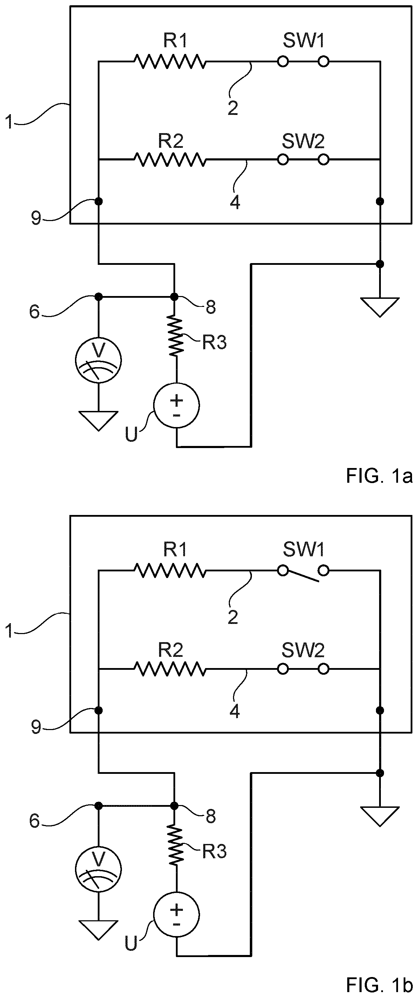

Fig. 1a depicts a temperature sensing unit 1 for a vehicle comprising a first thermal switch SW1 and a second thermal switch SW2, which are coupled in parallel in a parallel circuit. The two thermal switches SW1, SW2 may be bimetal thermal switches having different switching temperatures. In the embodiment shown in Fig, 1, the two thermal switches SW1, SW2 are bimetal switches, which are closed below a switching temperature and are open above the switching temperature. In particular, the thermal switch SW1 opens at a first switching temperature T1, and the thermal switch SW2 opens at a second switching temperature T2, which is higher than the first switching temperature T1.

The parallel circuit comprises a first branch 2 including the first thermal switch SW1, to which a resistor R1 is coupled in series, and a second branch 4 including the second thermal switch SW2, to which a resistor R2 is coupled in series. For optimizing voltage levels of the temperature sensing unit 1, the resistors R1 and R2 have advantageously about the same value of electrical resistance, i.e., R1 ~ R2.

In a preferred embodiment, the circuit elements of the temperature sensing unit 1 are integrated within a compact module, which can be mounted at a brake of a vehicle for monitoring the operation of the brake. The temperature sensing unit 1 can be used for disc brakes as well as for drum brakes.

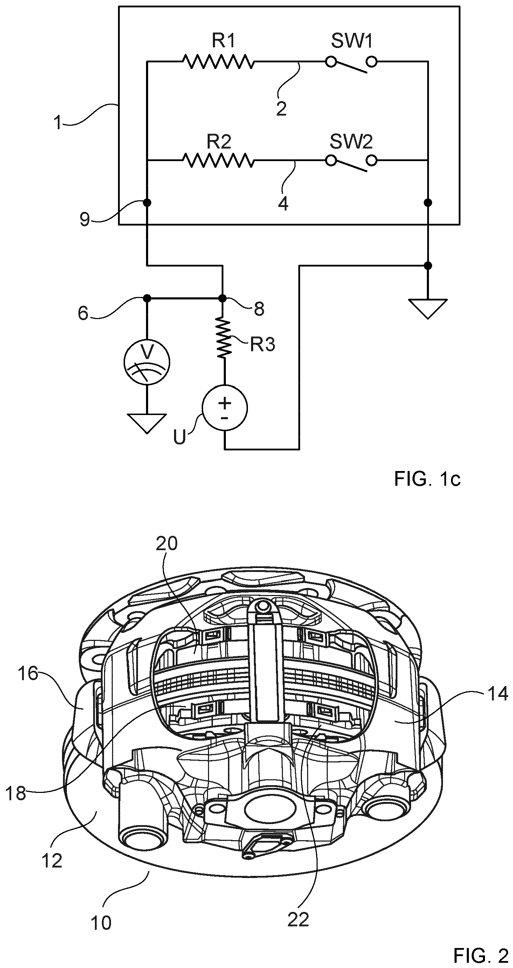

The temperature sensing unit 1 is mounted, for example, at a disc brake 10 of a commercial vehicle, as shown in Fig. 2. The disc brake 10 comprises a brake rotor 12, a brake caliper 14 and a brake anchor plate 16 with an inboard brake pad 18 and an outboard brake pad 20. The temperature sensing unit 1 may then advantageously be fixed at a back side 22 of the inboard brake pad 18, for sensing a relevant temperature of the disc brake 10.

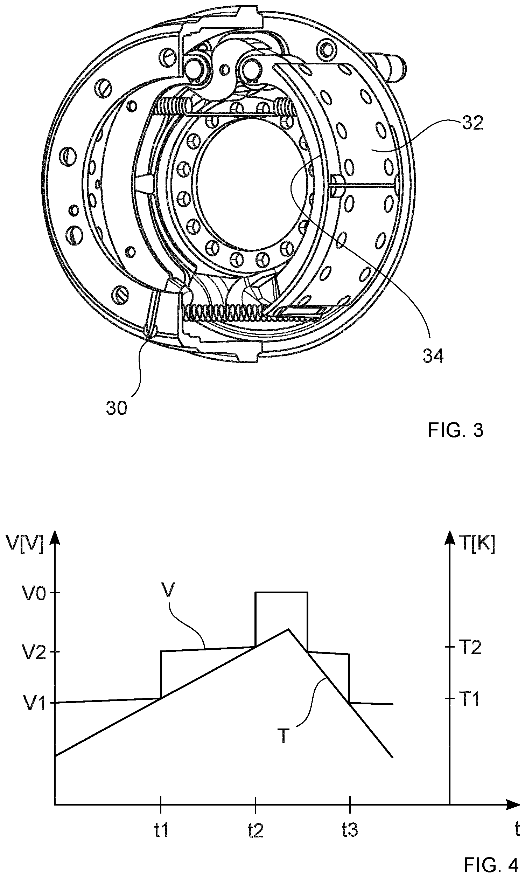

In another embodiment, the temperature sensing unit 1 is fixed at a drum brake 30 of a commercial vehicle, as shown in Fig. 3. The drum brake 30 comprises a brake shoe 32, wherein at a back side 34 of the brake shoe 32 the temperature sensing unit 1 is mounted.

The temperature sensing unit 1 may be coupled, for example, via a third resistor R3 to a voltage source U providing a voltage V0, as shown in Fig. 1a. At a sensing contact 6, which is coupled to a connection point 8 provided between a terminal 9 of the temperature sensing unit 1 and the resistor R3, voltages V can be observed, which depend on the temperature sensed by the temperature sensing unit 1, as shown in Fig. 4. Fig. 4 depicts the voltage V and the temperature T as a function of time t.

If the temperature at the temperature sensing unit 1 is below the temperature T1, both thermal switches SW1, SW2 are closed, and the temperature sensing unit 1 provides a voltage V1 at the sensing contact 6, which corresponds to a state 1, Fig. 1a, depending on the values of the resistors R1, R2, R3.

When the temperature at the temperature sensing unit 1 rises to a temperature above T1, at a time point t1, but remains below temperature T2, then only the thermal switch SW1 opens, therefore stopping the current through resistor R1, which corresponds to a state 2, Fig. 1b. Correspondingly, the voltage at the sensing contact 6 raises to voltage V2, because a current I through resistor R3 is reduced, i.e., V2 = V0 - I x R3.

When the temperature at the temperature sensing unit 1 rises further to the temperature T2, at a time point t2, then in addition the thermal switch SW2 opens, stopping the current through resistor R2, which corresponds to a state 3, Fig. 1c. Correspondingly, no current flows through the temperature sensing unit 1 and the resistor R3. The voltage provided at the sensing contact 6 is then voltage V0.

If, at a later point in time, the temperature at the temperature sensing unit 1 falls again below the temperature T1, at a time point t3, then the voltage at the sensing contact 6 drops again to the voltage V1.

If the temperature sensing unit 1 is not properly connected to the voltage source U, or if the temperature sensing unit 1 is broken, no current flows through resistor R3. In this case, the voltage provided at the sensing contact 6 is also the voltage V0. This is an indication that the temperature sensing unit 1 might not be working properly during a normal operation of the vehicle. However, as a measured voltage V0 does not necessarily mean that the sensing unit 1 is not working properly, an additional condition is preferably considered. For example, if a direct change of voltage from V1 to V0 is detected, or if after some cooldown period measured by a timer, i.e., a period where the vehicle is not moving and the brakes are cooling down, the voltage is still V0, it may safely be assumed that the sensing unit 1 is not working properly.

The resistors R1 and R2 have in a preferred embodiment the same value of electrical resistance, i.e., R1 = R2, as the resistance of the resistors R1, R2 changes with the temperature as sensed at the vehicle brake. The voltage difference of the voltages V1 and V2 then will be highest and a potential overlap of state 1 and state 2 in terms of the voltage V can be avoided.

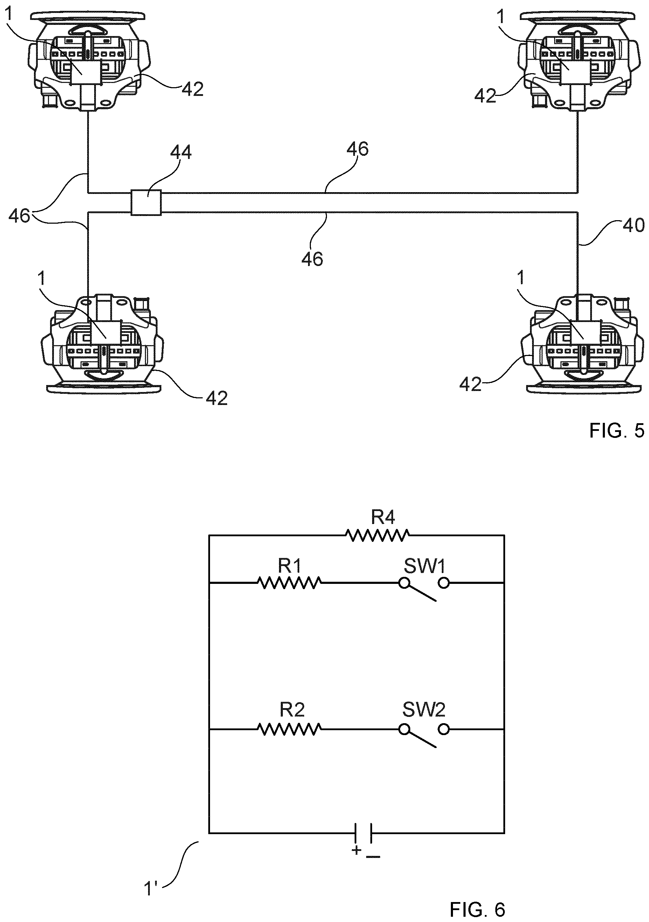

Fig. 5 depicts a brake monitoring system 40 for a vehicle, particularly for a commercial vehicle, which comprises four wheels. Each wheel is provided with a brake, in this embodiment a disc brake 42, for each of which a temperature sensing unit 1 provided. The brake monitoring system 40 further comprises a processing unit 44, which is coupled via lines 46 to each of the temperature sensing units 1 for operating the temperature sensing units 1. Particularly, the processing unit 44 provides a supply voltage to each of the temperature sensing units 1 via the lines 46 for monitoring the temperatures of each of the disc brakes 42.

The brake monitoring system 40 comprises further indicating means in a cabin of the vehicle for informing a driver of the vehicle about the operating states of the four disc brakes 42. For example, when the temperature T1 is reached at one of the disc brakes 42, the driver is informed by the brake monitoring system 40 to change their driving style to let the brakes 42 cool off, for example to use a retarder of the vehicle or to use a regeneration braking. The temperature T1 may in particular be a temperature at which a higher wear of the brake pads of the disc brakes 42 occurs. The driver of the vehicle is, therefore, informed that they reach a driving state in which a higher abrasion of the brake pads occurs, and which driving state should also be avoided with regard to the environment.

If the temperature at one of the disc brakes 42 increases further and reaches the temperature T2, then the brake monitoring system 40 sends a higher warning level to the driver or turns on an emergency mode of the vehicle, in which a maximum speed of the vehicle is limited, or with a communication to the driver to stop the vehicle, if possible, to let the disc brakes 42 cool off, until the temperature at the disc brakes 42 drops below the T1 temperature value, or at least below the T2 temperature value. The temperature T2 may in particular be a temperature which is dangerous for the disc brakes 42, or at which temperature the disc brakes 42 may be damaged.

In addition, the brake monitoring system 40 may be configured to recognize a state in which one of the temperature sensing units 1 is at a different, higher temperature than the others for a prolongated time without a braking action, which would indicate a hot runner of one of the disc brakes 42. The brake monitoring system 40 may further recognize if no current flows through one of the temperature sensing units 1 in a normal driving state, which indicates that this temperature sensing unit 1 is faulty, for example when this temperature sensing unit 1 is broken or is disconnected.

In another preferred embodiment, shown in Fig. 6, a temperature sensing unit 1' comprises the parallel circuit with the first thermal switch SW1 and the second thermal switch SW2, to which a third resistor R4 is coupled in parallel, and wherein the two thermal switches SW1, SW2 are bimetal thermal switches having different switching temperatures T1, T2, but are bimetal switches, which are open below their respective switching temperature and are closed above their switching temperature.

In this case, the voltage at the temperature sensing unit 1' is highest when the temperature at the temperature sensing unit 1' is below temperature T1, as a current flows only through resistor R4. If the temperature at the temperature sensing unit 1' rises to the temperature T1, but remains below temperature T2, then the thermal switch SW1 closes, providing a current through resistor R1. Correspondingly, the voltage at the temperature sensing unit 1' drops.

If the temperature at the temperature sensing unit 1' rises further to the temperature T2, then in addition the thermal switch SW2 closes, providing a current through resistor R2. Correspondingly, the voltage at the temperature sensing unit 1' drops further.

If the temperature sensing unit 1' is not orderly connected to the processing unit 44, or if the temperature sensing unit 1' is broken, no current flows through the temperature sensing unit 1', which indicates that the temperature sensing unit 1' is not working properly.

Also other embodiments may be utilized by one skilled in the art without departing from the scope of the present disclosure. The disclosure resides therefore in the claims herein after appended.

### List of Reference signs (part of the description):

- 1,1': temperature sensing units
- 2, 4: branches of the parallel circuit
- 6: sensing contact
- 8: connection point
- 9: terminal of temperature sensing unit 1
- 10: disc brake
- 12: brake rotor
- 14: brake caliper
- 16: brake anchor plate
- 18, 20: brake pads
- 22: back side of brake pad 18
- 30: drum brake
- 32: brake shoe
- 34: back side of the brake shoe
- 40: brake monitoring system
- 42: disc brakes
- 44: processing unit
- 46: lines
- SW1, SW2: thermal switches
- T: temperature
- T1, T2: switching temperatures
- R1, R2: resistors
- R3, R4: resistors
- U: voltage source
- V0, V1, V2: voltages
- t: time
- t1, t2, t3: time points

## Claims

1. A temperature sensing unit (1, 1') for a vehicle brake (10, 30, 42), comprising a parallel circuit having a first branch (2) with a first thermal switch (SW1) and a second branch (4) with a second thermal switch (SW2), wherein the first thermal switch (SW1) is designed to switch at a first switching temperature (T1) indicating a first condition of the vehicle brake (10, 30, 42), and the second thermal switch (SW2) is designed to switch at a second switching temperature (T2) higher than the first switching temperature (T1) for indicating a second condition of the vehicle brake (10, 30, 42).

2. The temperature sensing unit (1, 1') of claim 1, wherein the thermal switches (SW1, SW2) are bimetal thermal switches (SW1, SW2).

3. The temperature sensing unit (1) of claim 2, wherein the bimetal thermal switches (SW1, SW2) are closed below their switching temperature (T1, T2) and are open above their switching temperature (T1, T2).

4. The temperature sensing unit (1, 1') of one of the preceding claims, wherein the first branch (2) comprises a first resistor (R1) coupled in series with the first thermal switch (SW1) and the second branch (4) comprises a second resistor (R2) coupled in series with the second thermal switch (SW2).

5. The temperature sensing unit (1, 1') of claim 4, wherein the first resistor (R1) and the second resistor (R2) have about the same value.

6. The temperature sensing unit (1, 1') of one of the preceding claims, wherein the first temperature (T1) is a first critical temperature for the vehicle brake (10, 30, 42), for example a temperature at which a high wear of the vehicle brake (10, 30, 42) occurs, and the second temperature (T2) is a second critical temperature for the vehicle brake (10, 30, 42), for example a temperature at which the vehicle brake (10, 30, 42) may be damaged.

7. The temperature sensing unit (1, 1') of one of the preceding claims, wherein the circuit elements (SW1, SW2, R1, R2) of the temperature sensing unit (1, 1') are integrated within a module being fixable at a brake pad (18) or a brake shoe (32) of the vehicle brake (10, 30, 42).

8. Brake monitoring system (40) for a vehicle, comprising a processing unit (44) and a temperature sensing unit (1, 1') according to one of the preceding claims, which is mountable at a brake (10, 30, 42) of the vehicle.

9. The brake monitoring system (40) of claim 8, wherein the brake (10, 30, 42) is a disc brake (10, 42) and the temperature sensing unit (1, 1') is mountable at a back side (22) of a brake pad (18) of the disc brake (10, 42).

10. The brake monitoring system (40) of claim 8, wherein the brake (10, 30, 42) is a drum brake (30) and the temperature sensing unit (1, 1') is mountable at a back side (34) of a brake shoe (32) of the drum brake (30).

11. The brake monitoring system (40) of one of claims 8 to 10, comprising indicating means for a cabin of the vehicle for informing a driver of the vehicle about an operating state of the brake (10, 30, 42).

12. The brake monitoring system (40) according to one of claims 8 to 11, comprising a temperature sensing unit (1, 1') for each brake (42) of the vehicle.

13. The brake monitoring system (40) of claim 12, wherein the processing unit (44) is connectable via lines (46) to each of the temperature sensing units (1, 1') for operating the temperature sensing units (1, 1').

14. Vehicle, comprising a brake monitoring system (40) according to one of claims 8 to 13.
